# FASCICULE DE BREVET EUROPEEN

(11) **EP 0 693 650 B1**
(45) Date de publication et mention de la délivrance du brevet: **26.05.1999**
(21) Numéro de dépôt: 95201911.5
(22) Date de dépôt: 12.07.1995
(51) Int. Cl.: F16L 11/08

(54) **Article composite et procédé pour sa fabrication**
Verbundwerkstück und Verfahren zu seiner Herstellung
Composite article and method of producing the same

(30) Priorité: 27.12.1994 BE 9401178; 20.07.1994 BE 9400689
(43) Date de publication de la demande: 24.01.1996
(73) Titulaire: SOLVAY (Société Anonyme), B-1050 Bruxelles (BE)
(72) Inventeur: Dupont, Serge, B-1800 Vilvoorde (BE); Delimoy, Didier, B-1302 Dion-Valmont (BE); De Bruille, Thierry, B-1330 Rixensart (BE)
(74) Mandataire: Dambois, Denis Camille Daniel

(56) Documents cités:
- EP-A- 0 158 631
- EP-A- 0 530 074
- GB-A- 2 005 377
- GB-A- 2 077 880
- US-A- 4 705 660

## Description

La présente invention concerne un article composite à base de matière plastique renforcé au moyen de fibres de renforcement.

Les matières plastiques sont actuellement largement utilisées pour la fabrication d'articles de tous types, notamment pour la fabrication de corps creux injectés ou soufflés, ou encore pour la fabrication de corps pleins tels que des profilés ou des barres.

Afin de réduire l'épaisseur de la paroi de certains autres articles, il a déjà été proposé de les renforcer au moyen de fibres de renforcement disposées à leur surface. Une telle solution est notamment présentée dans le document GB-A-2077880, qui décrit un tuyau en matière plastique renforcé à la fois par des faisceaux de fibres continues de renforcement parallèles à son axe disposés à sa surface et par des faisceaux de fibres continues de renforcement enroulés hélicoïdalement (sous un angle pouvant varier de 30 à 90°).

La fabrication de tels articles selon un procédé continu est d'une complexité considérable ; en effet, outre un ou plusieurs dévidoirs rotatifs de faisceaux de fibres continues de renforcement servant à réaliser le renforcement hélicoïdal autour d'un corps central, il est nécessaire de prévoir un grand nombre de dévidoirs fixes pour réaliser le renforcement axial (un nombre d'autant plus grand que les faisceaux de fibres continues utilisés pour le renforcement axial sont étroits et que les dimensions extérieures de l'article sont élevées).

En outre, le fait que les faisceaux de fibres continues de renforcement axial soient disposés en une mince épaisseur de manière concentrée à la surface extérieure du corps peut porter préjudice à la reprise des efforts axiaux par ceux-ci. De plus, cette reprise dépend de l'adhérence des faisceaux au corps central, qui dépend elle-même fortement de conditions opératoires, par exemple de la température de ces faisceaux et du corps, de la précision du "dépôt" des faisceaux ou encore de la pression exercée sur ceux-ci lors de leur application.

De manière originale, la présente invention a dès lors pour objet un type d'article composite présentant une excellente résistance à long terme, et qui puisse être fabriqué de manière simple.

De manière plus précise, l'invention concerne un article composite comprenant un corps creux injecté ou un corps plein à base d'au moins une matière thermoplastique A, renforcé par au moins un faisceau de fibres continues de renforcement enroulé extérieurement à sa surface, sensiblement perpendiculairement à son axe, qui se caractérise en ce que ledit corps est en outre renforcé par des fibres de renforcement dispersées en son sein, sensiblement parallèlement à son axe, et en ce que le faisceau de fibres contenues de renforcement est imprégné par une matière thermoplastique B.

Par corps creux injecté, on entend désigner tout type de pièce creuse, telle que par exemple un flacon, obtenue par l'un des procédés d'injection connus, avec ou sans soufflage, par exemple par injection sur noyau fusible, sur noyau soluble ou sur noyau gonflable ou par injection assistée par gaz. Par extension, on qualifiera ici également de corps creux injecté les pièces, telles que des réservoirs, fabriquées par extrusion-soufflage, qui ont des dimensions finies.

Par corps plein, on entend désigner tout type de pièce massive, qu'elle ait été fabriquée par injection, par extrusion ou par tout autre procédé. A titre d'exemples de corps pleins, on peut notamment citer les barres, les profilés, etc.

Le faisceau de fibres continues de renforcement est imprégné par une matière thermoplastique B. Un tel faisceau, généralement qualifié de COFIT (continuous fiber impregnated by a thermoplastic), peut en particulier être obtenu en imprégnant les fibres continues de renforcement par un polymère à l'état fondu. Il peut également être obtenu en mettant en oeuvre un faisceau co-mêlé de fibres continues de renforcement et de fibres continues de matière plastique. Il peut encore être obtenu en mettant en oeuvre un faisceau de fibres continues de renforcement entre lesquelles a été dispersée une matière plastique en poudre. Dans ces deux derniers modes d'obtention, il est naturellement indispensable de chauffer le faisceau, avant son enroulement autour d'un corps, de manière à ce que la matière plastique fonde et imprègne de manière homogène les fibres de renforcement.

Selon une variante préférée, le corps est renforcé par deux faisceaux de fibres continues de renforcement enroulés hélicoïdalement dans des sens opposés.

De préférence, le ou les faisceaux de fibres continues de renforcement disposés hélicoïdalement autour du corps sont enroulés quasiment perpendiculairement à l'axe de celui-ci. On les enroule plus préférentiellement à plus de 80° par rapport audit axe.

De manière avantageuse, l'article est revêtu extérieurement d'une couche de finition comprenant une matière plastique C. Cette couche de finition, qui peut être réalisée par toute technique connue, notamment par surextrusion ou extrusion-couchage, a plusieurs effets avantageux : tout d'abord, elle protège le(s) faisceau(x) de fibres continues de renforcement de toute dégradation mécanique, notamment au cours de la manutention, du transport et de l'utilisation de l'article. Elle peut également assurer la protection chimique des faisceaux de fibres de renforcement, du corps et de son contenu éventuel. Elle peut notamment empêcher les polluants présents à l'extérieur d'un article creux conforme à l'invention de contaminer le fluide qu'il contient. Enfin, l'application de la couche de finition au moyen d'un dispositif de calibrage permet de donner à la surface extérieure de l'article composite une grande précision dimensionnelle, ce qui peut faciliter son insertion dans des orifices ou dans des éléments de raccordement, etc.

L'article peut encore comprendre, éventuellement, d'autres couches, par exemple une couche d'imperméabilisation constituée d'une mince feuille métallique enroulée autour du corps renforcé par le(s) faisceau(x) de fibres de renforcement. Dans un tel article, la couche de finition, qui est déposée sur ladite feuille métallique, assure également la protection mécanique de celle-ci.

Les matières plastiques A, B ou C mentionnées ci-dessus peuvent être essentiellement constituées d'un ou plusieurs polymères quelconques thermoplastiques. Souvent, A, B et C sont essentiellement constituées d'un ou plusieurs polymères thermoplastiques. De préférence, les matières plastiques mises en oeuvre sont thermoplastiques, c'est-à-dire que le ou les polymères dont elles sont essentiellement constituées sont des polymères thermoplastiques. Si plusieurs polymères différents sont utilisés en mélange pour le corps (matière plastique A), ils doivent être compatibles entre eux, ou rendus compatibles par l'utilisation d'un ou plusieurs agents compatibilisants adéquats, de manière à ce que le corps présente des propriétés mécaniques satisfaisantes. Cette remarque s'applique de manière analogue aux matières thermoplastiques B et C. A titre de polymères thermoplastiques, on peut notamment citer les polyoléfines, dont par exemple le polyéthylène (PE) ou le polypropylène (PP), les polymères du chlorure de vinyle, dont par exemple le poly(chlorure de vinyle) (PVC), ainsi que les polymères dérivés du fluorure de vinylidène, dont par exemple le poly(fluorure de vinylidène) (PVDF). De bons résultats ont été obtenus à partir de polyoléfines, en particulier à partir de PE. On préfère tout particulièrement le polyéthylène de haute densité (PEHD).

Afin notamment d'assurer une bonne adhérence entre le corps et le COFIT, et donc une bonne reprise des efforts par ce dernier, la matière plastique B est de préférence compatible avec la matière plastique A ou, mieux encore, d'une nature chimique semblable. A titre de paires de matières plastiques de nature chimique semblable, on peut par exemple utiliser deux polymères de l'éthylène, ou deux polymères du chlorure de vinyle. Leur compatibilité est ainsi assurée. Ces deux matières plastiques peuvent encore être rendues compatibles par l'utilisation d'un ou plusieurs agents compatibilisants adéquats mélangés à au moins l'une d'entre elles. On peut également leur interposer une couche d'adhésif.

Lorsqu'une couche de finition est présente, une bonne adhérence est souhaitable entre celle-ci et la "couche" que constitue(nt) le(s) COFIT à la surface du corps, afin d'éviter tout risque de délamination de la couche de finition. En outre, la couche de finition peut ainsi participer, même faiblement, à la reprise des efforts. Afin d'améliorer cette adhérence, la matière plastique C est avantageusement compatible avec la matière plastique B ou, mieux, d'une nature chimique semblable. Ces deux matières plastiques peuvent encore être rendues compatibles par l'utilisation d'un ou plusieurs agents compatibilisants mélangés à au moins l'une d'entre elles. On peut également leur interposer une couche d'adhésif.

En vue d'obtenir des propriétés mécaniques élevées et homogènes de l'article, les matières plastiques mises en oeuvre sont de préférence compatibles ou, mieux encore, d'une nature chimique semblable.

On préfère donc plus particulièrement que les matières plastiques mises en oeuvre soient essentiellement constituées de polyéthylène de haute densité.

On peut ajouter aux matières plastiques mises en oeuvre tout additif classique connu, par exemple un ou plusieurs pigments, adjuvants de mise en oeuvre, antioxydants, anti-UV, stabilisants, charges minérales, etc., pour autant que leur présence n'affecte pas sensiblement leurs propriétés mécaniques.

Le corps peut être constitué d'une ou de plusieurs couches. En particulier, on peut réaliser des corps constitués de plusieurs couches distinctes de matières plastiques différentes. Ainsi, dans le cas d'un article creux destiné à contenir un fluide corrosif, il peut être utile de prévoir, outre une couche extérieure comprenant une matière plastique A renforcée de fibres majoritairement axiales, une mince couche intérieure constituée d'une matière plastique présentant une bonne résistance chimique au fluide en question. On peut par exemple utiliser à cette fin un polymère du fluorure de vinylidène. Pour assurer l'adhérence de cette couche intérieure à la couche voisine, il peut être utile de leur interposer un adhésif adéquat.

Conformément à l'invention, le corps est renforcé par des fibres de renforcement dispersées en son sein, sensiblement parallèlement à son axe. Ces fibres peuvent être de tout type, par exemple des fibres de verre, de carbone ou d'aramide. On préfère utiliser des fibres de verre. Le diamètre des fibres est généralement de l'ordre de 7 à 100 µm. Les fibres de renforcement dispersées au sein du corps sont de préférence des fibres de renforcement courtes; en particulier, leur rapport L/D (longueur/diamètre) est de l'ordre de 10 à 10 000. Pour obtenir des fibres de renforcement d'une longueur relativement élevée et constante, il est avantageux de mettre en oeuvre une matière plastique A se présentant sous la forme de granules cylindriques de longueur déterminée, par exemple par une première étape d'extrusion de la matière plastique avec des fibres de renforcement de longueur élevée, suivie d'une seconde étape de découpage régulier des joncs ainsi obtenus. On préfère que la quantité de fibres dispersées au sein de la matière plastique A soit de 2 à 30 % en volume. Il importe que les fibres de renforcement utilisées soient dispersées sensiblement parallèlement à l'axe du corps. Si le corps ne possède pas à strictement parler d'axe, on entend ici désigner généralement par axe du corps la direction de sa plus grande dimension.

Il est nécessaire que les fibres choisies soient chimiquement compatibles avec la matière plastique A ; pour accroître cette compatibilité, et donc leur adhérence à leur matrice, elles sont éventuellement revêtues d'un agent de couplage (ou d'ensimage) approprié. Dans le cas de fibres de verre, on peut par exemple utiliser à cette fin l'un des composés de la famille des silanes bien connus dans ce contexte.

Comme déjà mentionné, dans l'article composite, c'est le corps qui contribue essentiellement à la reprise des efforts axiaux. A cet effet, il est avantageux que le matériau constitutif du corps, soit la matière thermoplastique A renforcée par les fibres dispersées en son sein, présente un faible allongement à la rupture dans un essai de traction. En particulier, le matériau constitutif du corps présente avantageusement un allongement à la rupture dans un essai de traction selon la norme ISO 527, à une vitesse de 10 mm/min et à une température de 23 °C, ne dépassant pas 100 %. De préférence, cet allongement ne dépasse pas 25 %. Plus préférentiellement encore, il ne dépasse pas 15 %.

Les fibres de renforcement utilisées dans le faisceau enroulé autour du corps peuvent également être de tout type, par exemple de l'un des types cités ci-dessus. Ici également, on préfère utiliser des fibres de verre. Quelle que soit leur nature, ces fibres sont continues, c'est-à-dire au moins d'une très grande longueur, par exemple de l'ordre de plusieurs centaines de mètres. Lorsque le faisceau de fibres de renforcement est imprégné par une matière thermoplastique B, on utilise de préférence des quantités respectives de matière thermoplastique B et de fibres de renforcement telles que le COFIT ainsi constitué contienne au moins de l'ordre de plusieurs centaines de fibres par mm² de section. La remarque faite ci-dessus s'applique ici également, concernant la compatibilité des fibres de verre et de la matière plastique.

Les caractéristiques de l'article composite selon l'invention sont de préférence déterminées de telle sorte que sa limite de résistance par rapport aux contraintes imposées en service soit d'abord atteinte dans la direction axiale.

La présente invention concerne également un procédé continu de fabrication d'un article composite tel que décrit ci-dessus, dans lequel les opérations de fabrication du corps, d'enroulement du ou des faisceaux de fibres de renforcement, et le cas échéant de réalisation de la couche de finition, se déroulent en ligne.

La fabrication du corps est réalisée par tout procédé connu (injection, ...), de manière à orienter essentiellement parallèlement à son axe les fibres de renforcement dispersées en son sein.

L'enroulement du ou des faisceaux de fibres continues de renforcement peut se faire en utilisant un dispositif planétaire, c'est-à-dire un plateau annulaire de grande dimension dont l'axe de rotation coïncide avec celui du corps à renforcer, portant un ou plusieurs dévidoirs de faisceaux de fibres de renforcement. La vitesse de rotation de ce plateau annulaire est adaptée, notamment en fonction de la vitesse de translation du corps, de la largeur des faisceaux de fibres de renforcement, de leur angle d'enroulement, etc., afin d'obtenir des spires jointives à la surface du corps. Si l'on désire enrouler plusieurs faisceaux de fibres de renforcement dans des sens différents, il faut naturellement utiliser deux tels plateaux annulaires, décalés axialement et tournant dans des sens opposés. Il est en outre préférable, juste avant que les faisceaux de fibres de renforcement n'entrent en contact avec le corps, de préchauffer au moins la couche superficielle de l'un de ces deux éléments à une température supérieure, de préférence supérieure de 5 à 100 °C, à la température de fusion ou de ramollissement de sa matière plastique constitutive, de manière à améliorer leur adhérence. Il est également recommandé d'enrouler les faisceaux de fibres de renforcement autour du corps en leur appliquant une certaine tension.

Dans les cas où on utilise un seul faisceau de fibres de renforcement que l'on enroule quasiment perpendiculairement à l'axe du corps, il suffit d'utiliser un seul plateau annulaire portant un seul dévidoir de faisceaux de fibres de renforcement, ce qui permet d'utiliser une installation de fabrication extrêmement simplifiée.

Après l'enroulement du ou des faisceaux de fibres continues de renforcement, on peut procéder à la réalisation de la couche de finition, par exemple, dans le cas d'un corps de section constante, en faisant passer le corps renforcé dans une tête d'extrusion en équerre que l'on alimente par la matière thermoplastique C fondue.

Ce procédé est d'une grande simplicité, et particulièrement économique à mettre en oeuvre. En particulier, si le "dépôt" de la couche de finition sur le corps renforcé se fait immédiatement après que celui-ci ait été renforcé par enroulement de faisceau(x) de fibres continues de renforcement, le réchauffage superficiel du corps renforcé ne nécessitera pas une énergie importante, en raison de la température élevée à laquelle sont généralement préchauffés superficiellement le corps et/ou les faisceaux de fibres de renforcement avant le renforcement du mandrin par ces derniers.

A titre d'exemples non-limitatifs, l'invention permet notamment de produire :
- des récipients fabriqués par injection et destinés à contenir un fluide sous pression, tels que des réservoirs à liquide de freinage de véhicules ou des bouteilles à gaz (par exemple des bouteilles destinées à la plongée sous-marine, dont le poids est avantageusement réduit par rapport à leurs homologues métalliques);
- des barres pleines, cylindriques ou prismatiques, fabriquées par extrusion, destinées à accroître la rigidité en flexion et/ou en torsion de divers assemblages, tels que des portières ou autres parties de véhicules, ou encore des arbres de transmission;

## Revendications

1. Article composite comprenant un corps creux injecté ou un corps plein à base d'au moins une matière thermoplastique A, renforcé par au moins un faisceau de fibres continues de renforcement enroulé extérieurement à sa surface, sensiblement perpendiculairement à son axe, caractérisé en ce que ledit corps est en outre renforcé par des fibres de renforcement dispersées en son sein, sensiblement parallèlement à son axe, et en ce que le faisceau de fibres continues de renforcement est imprégné par une matière thermoplastique B.

2. Article composite selon la revendication 1, revêtu extérieurement d'une couche de finition comprenant une matière thermoplastique C.

3. Article composite selon l'une quelconque des revendications précédentes, dans lequel les matières thermoplastiques mises en oeuvre sont essentiellement constituées de polyéthylène de haute densité.

4. Article composite selon l'une quelconque des revendications précédentes, dans lequel le corps est renforcé par deux faisceaux de fibres continues de renforcement enroulés hélicoïdalement dans des sens opposés.

5. Article composite selon l'une quelconque des revendications précédentes, dans lequel les fibres de renforcement sont des fibres de verre.

6. Article composite selon l'une quelconque des revendications précédentes, dans lequel les fibres de renforcement dispersées au sein du corps sont des fibres de renforcement courtes.

7. Article composite selon l'une quelconque des revendications précédentes, tel que sa limite de résistance par rapport aux contraintes imposées en service soit d'abord atteinte dans la direction axiale.

8. Procédé continu de fabrication d'un article composite comprenant un corps plein à base d'au moins une matière thermoplastique A, renforcé par au moins un faisceau de fibres continues de renforcement imprégné par une matière thermoplastique B, enroulé extérieurement à sa surface sensiblement perpendiculairement à son axe, ainsi que par des fibres de renforcement dispersées en son sein sensiblement parallèlement à son axe, selon lequel les opérations de fabrication du corps, d'enroulement du ou des faisceaux de fibres de renforcement, et le cas échéant de réalisation de la couche de finition, se déroulent en ligne.

## Patentansprüche

1. Verbundgegenstand, der einen gespritzten Hohlkörper oder einen Vollkörper auf der Basis wenigstens eines thermoplastischen Materials A umfaßt, der durch wenigstens ein auf der Außenseite seiner Oberfläche fast senkrecht zu seiner Achse herumgewickeltes Bündel kontinuierlicher Verstärkungsfasern verstärkt ist, dadurch gekennzeichnet, daß besagter Körper außerdem durch in seinem Innern fast parallel zu seiner Achse dispergierte Verstärkungsfasern verstärkt ist, und dadurch, daß das Bündel kontinuierlicher Verstärkungsfasern mit einem thermoplastischen Material B getränkt ist.

2. Verbundgegenstand gemäß Anspruch 1, der außen mit einer Deckschicht, die ein thermoplastisches Material C umfaßt, beschichtet ist.

3. Verbundgegenstand gemäß einem der vorhergehenden Ansprüche, bei dem die eingesetzten thermoplastischen Materialien im wesentlichen aus Polyethylen hoher Dichte bestehen.

4. Verbundgegenstand gemäß einem der vorhergehenden Ansprüche, bei dem der Körper durch zwei Bündel kontinuierlicher Verstärkungsfasern, die spiralförmig in entgegengesetzten Richtungen herumgewickelt sind, verstärkt ist.

5. Verbundgegenstand gemäß einem der vorhergehenden Ansprüche, bei dem die Verstärkungsfasern Glasfasern sind.

6. Verbundgegenstand gemäß einem der vorhergehenden Ansprüche, bei dem die im Innern des Körpers dispergierten Verstärkungsfasern kurze Verstärkungsfasern sind.

7. Solcher Verbundgegenstand gemäß einem der vorhergehenden Ansprüche, daß seine Festigkeitsgrenze, bezogen auf die vorgegebenen Belastungen im Betrieb, zuerst in der axialen Richtung erreicht wird.

8. Kontinuierliches Verfahren zur Herstellung eines Verbundgegenstands, der einen Vollkörper auf der Basis wenigstens eines thermoplastischen Materials A umfaßt, der durch wenigstens ein auf der Außenseite seiner Oberfläche fast senkrecht zu seiner Achse herumgewickeltes Bündel kontinuierlicher Verstärkungsfasern, das mit einem thermoplastischen Material B getränkt ist, sowie durch in seinem Innem fast parallel zu seiner Achse dispergierte Verstärkungsfasern verstärkt ist, gemäß dem die Vorgänge zur Herstellung des Körpers, zum Herumwickeln des oder der Bündel von Verstärkungsfasern und gegebenenfalls zur Ausführung der Deckschicht in Reihe ablaufen.

## Claims

1. Composite article comprising an injected hollow body or a solid body based on at least one thermoplastic A, reinforced by at least one bundle of continuous reinforcing fibres, the bundle being wound externally at its surface, substantially perpendicular to its axis, characterized in that the said body is furthermore reinforced by reinforcing fibres dispersed within it, substantially parallel to its axis, and in that the bundle of continuous reinforcing fibres is impregnated by a thermoplastic B.

2. Composite article according to claim 1, coated on the outside with a finishing layer comprising a thermoplastic C.

3. Composite article according to any one of the preceding claims, in which the thermoplastics employed essentially consist of high-density polyethylene.

4. Composite article according to any one of the preceding claims, in which the body is reinforced by two bundles of continuous reinforcing fibres wound helically in opposite directions.

5. Composite article according to any one of the preceding claims, in which the reinforcing fibres are glass fibres.

6. Composite article according to any one of the preceding claims, in which the reinforcing fibres dispersed within the body are short reinforcing fibres.

7. Composite article according to any one of the preceding claims, such that its strength limit with respect to the stresses imposed in service is firstly reached in the axial direction.

8. Continuous process for manufacturing a composite article comprising a solid body based on at least one thermoplastic A, reinforced by at least one bundle of continuous reinforcing fibres, the bundle being wound externally at its surface, substantially perpendicular to its axis, characterized in that the said body is furthermore reinforced by reinforcing fibres dispersed within it, substantially parallel to its axis, and in that the bundle of continuous reinforcing fibres is impregnated by a thermoplastic B, wound externally at its surface, substantially perpendicular to its axis, as well as by reinforcing fibres dispersed within it, substantially parallel to its axis, in which the operations of manufacturing the body, of winding the bundle or bundles of reinforcing fibres and, if necessary, of producing the finishing layer take place in line.
